# EUROPEAN PATENT APPLICATION

(11) **EP 2 639 689 A1**
(43) Date of publication of application: **18.09.2013**
(21) Application number: 12159598.7
(22) Date of filing: 15.03.2012
(51) Int. Cl.: G06F 3/14, G09G 5/14, G09B 9/32, H04N 5/262, H04N 5/445

(54) **A multi-source multiple documents comparison display (presentation or discussion) system**

(71) Applicant: Habook Information Technology Inc., Taipei City 106 (TW)
(72) Inventor: Wu, Chuan-Wei, 106 Taipei City (TW); Liang, Jen-Kai, 106 Taipei City (TW)
(74) Representative: Viering, Jentschura & Partner

(57) **Abstract**

A multi-source multiple documents comparison display (presentation or discussion) system as a computer's auxiliary display system is installed in a host computer for a multiple documents comparison interface displayed on a public screen. The system is divided into two stages, document collection stage and comparison display stage: (1) document collection stage deciding the number of multiple quadrants to be arranged via the multiple documents comparison interface and displaying multi-resource documents; (2) comparison display stage for each document, which has been zoomed out and arranged on a public screen, enlarged and inspected with a control button on each corresponding thumbnail clicked.

## Description

### BACKGROUND OF THE INVENTION

### 1. FIELD OF THE INVENTION

The present invention is a multi-source multiple documents comparison display (presentation or discussion) system which is taken as a computer's auxiliary display system and installed in a host computer for a multiple documents comparison interface displayed on a public screen.

### 2. DESCRIPTION OF THE PRIOR ART

In recent years, the different types of application equipment and software have emerged due to fast developed network technologies and high transmission rates. With conventional systems gradually replaced by interactive technologies such as Internet and computer equipment, a conventional projector for documents projected to and displayed by one single projective machine only is limited to neither interactional functions provided nor real-time connection to another device and fails in simultaneous display of related information.

A conventional projector system or device is an inconvenient tool which fails to promote interaction or coordinate networks simultaneously and is unfavorable to data updated or downloaded to a conventional projector, so that any new version of software for an update purpose must be downloaded to a private computer first and hence requires extra time or work.

### SUMMARY OF THE INVENTION

The object of the present invention is to provide one multi-source multiple documents comparison display (presentation or discussion) system as a computer's auxiliary display system which is installed in a host computer (Host) connecting Clients and is immediately displayed as one multiple documents comparison interface on a public screen.

The other object of the present invention is to provide a multi-source multiple documents comparison display (presentation or discussion) system with a document collection stage and a comparison display stage: (1) Document collection stage: The comparison interface is selectively split to and arranged as a number of different quadrants and displayed according to multiple documents for the purpose of documents transmitted from different mobile sources, devices or carriers via a cable network or a wireless network with the multi-source multiple documents comparison display (presentation or discussion) system activated by a host computer (Host); (2) Comparison display stage: The distinct thumbnails for compressed documents are arranged and displayed on a public screen and provided with control buttons, each of which can be clicked to check one document's content individually.

The data transfer devices which facilitate multiple and real-time sources of documents comprise:
Document Camera (DC) providing immediately shot data such as document and object;
Tablet personal computer (PAD) or notebook computer for documents or data in any page immediately transported to a host computer via a cable network or a Wireless Local Area Network;
Smartphone providing real-time data via a Wireless Local Area Network; and
Mobile device used to transport documents or data which can be received by a host computer and displayed on a public screen.

The further object of the present invention is to label information, which is necessary to document comparison or presentation, on a document in the system and simultaneously offer a user's mobile device (or host computer) a mechanism of real-time vote.

These features and advantages of the present invention will be fully understood and appreciated from the following detailed description of the accompanying Drawings.

### DETAILED DESCRIPTION OF THE PREFERRED EMBODIMENT

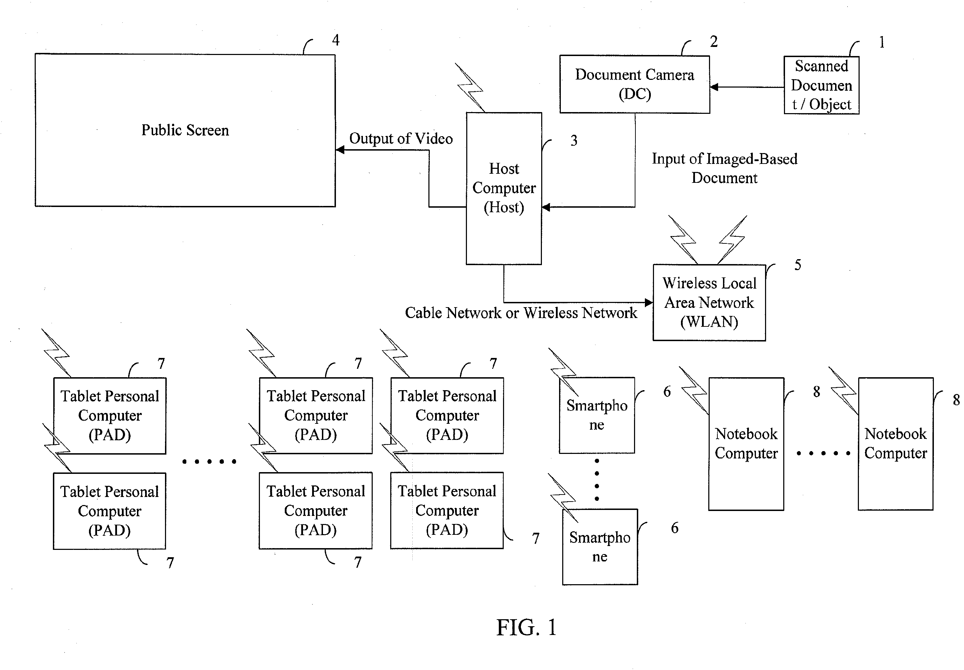

Referring to FIG. 1 which is the schematic illumination for the present invention of a multi-source multiple documents comparison display (presentation or discussion) system composed of a Document Camera (DC) 2, a host computer (Host) 3, and a public screen 4 wherein the Document Camera (DC) 2 is used to input image information of a scanned document or object 1 into the host computer 3 for corresponding video out of the host computer 3 displayed on the public screen 4. The host computer (Host) 3 links a Wireless Local Area Network (WLAN) 5 via a cable network or a Wireless Local Area Network in order to achieve documents or data transmitted among mobile devices such as Smartphone 6, tablet personal computer 7, and notebook computer 8 and votes through a Wireless Local Area Network.

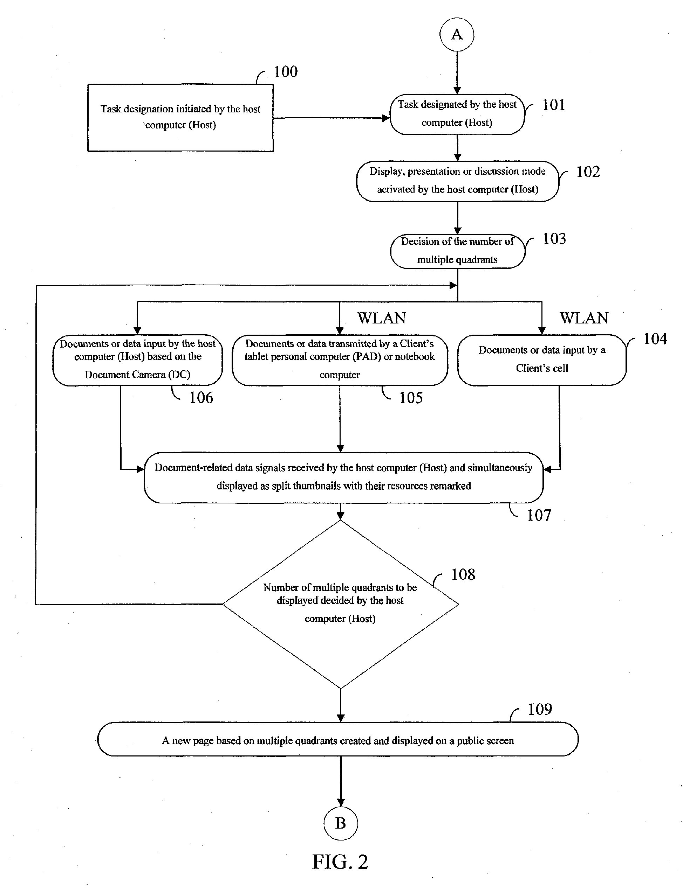

Referring to FIG. 2 which is the flowchart for the present invention of a multi-source multiple documents comparison display (presentation or discussion) system in sequence: (a) Task designation initiated by the host computer (Host) 100; (b) Task designated by the host computer (Host) 101; (c) Display, presentation or discussion mode activated by the host computer (Host) 102; (d) Number of multiple quadrants decided by the system of the host computer (Host) 103; (e) Connection to a Wireless Local Area Network (WLAN) for documents or data input by a Client's cell phone 104, documents or data transmitted by a Client's tablet personal computer (PAD) or notebook computer 105, or documents or data input by the host computer (Host) based on the Document Camera (DC) 106 which is capable of scanning substantial objects for scanned image-based documents or data exported to the host computer (Host); (f) Document-related data signals transmitted to the host computer (Host) from all Clients' mobile devices or Document Cameras (DC) and simultaneously displayed as split thumbnails with their resources remarked 107; (g) Number of multiple quadrants to be displayed decided by the host computer (Host) 108 (otherwise documents (or data) re-transmitted in case of any error during transmission of documents (or data) or indetermination of the number of multiple quadrants to be displayed); (h) All documents (or data) integrated in a new page by the system and displayed in multiple quadrants on a public screen with documents conclusively transmitted 109.

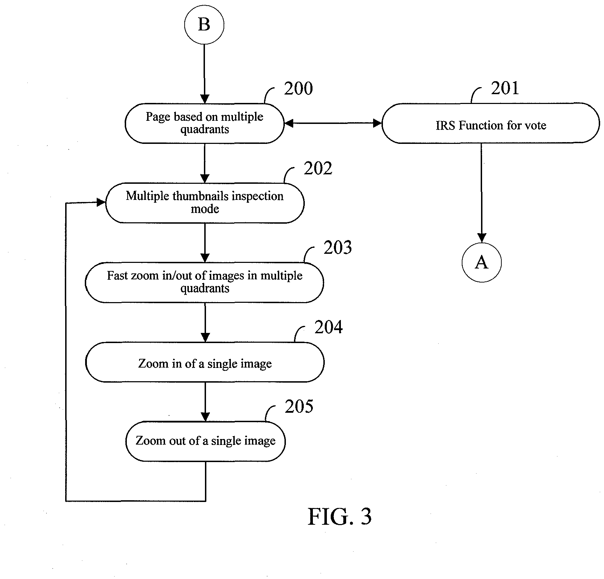

Referring to FIG. 3 which illustrates the flowchart describing multiple thumbnails to be zoomed in/out for the present invention of a multi-source multiple documents comparison display (presentation or discussion) system. As shown in FIG. 2, image-based documents and objects transmitted to the host computer (Host) can be viewed by one user with a new page based on multiple quadrants 200 created wherein the new page based on multiple quadrants 200 comprises several functions as follows: multiple thumbnails inspection mode 202, fast zoom in/out of images in multiple quadrants 203, zoom in of a single image 204, and zoom out of a single image 205. Furthermore, the IRS (Interactive Response System) function for vote 201 is intended for voting image-based documents or objects through the page based on multiple quadrants 200 on a public screen in a manner of Clients' mobile devices and the host computer (Host) connected via a cable network or a wireless network.

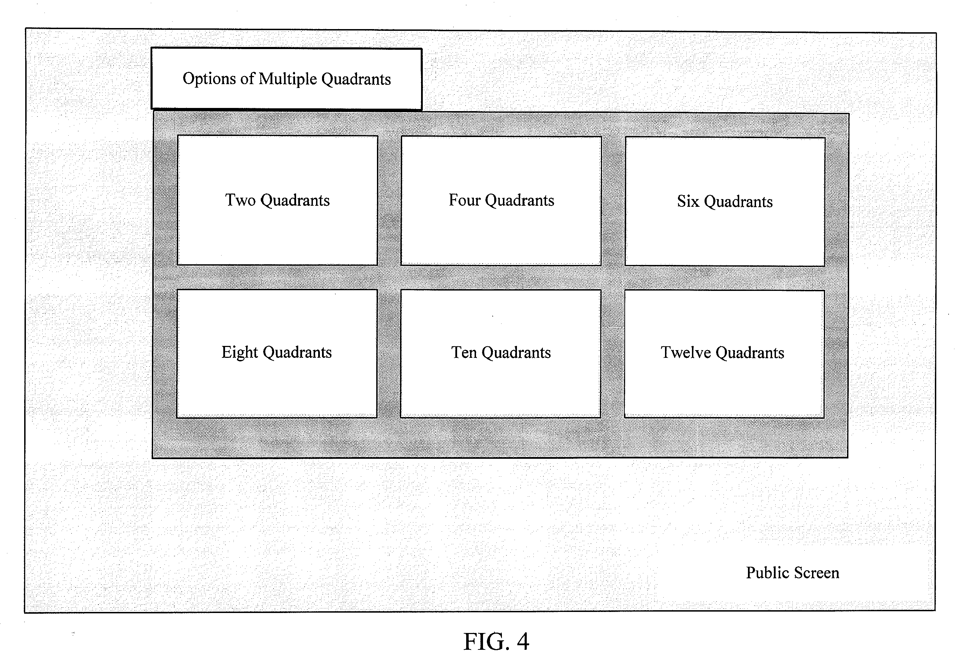

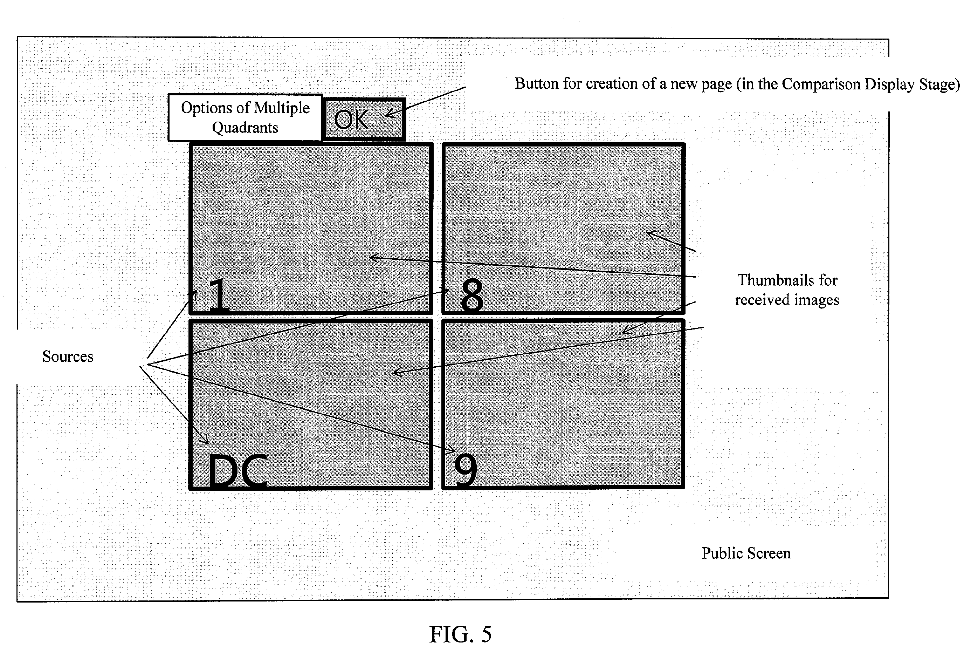

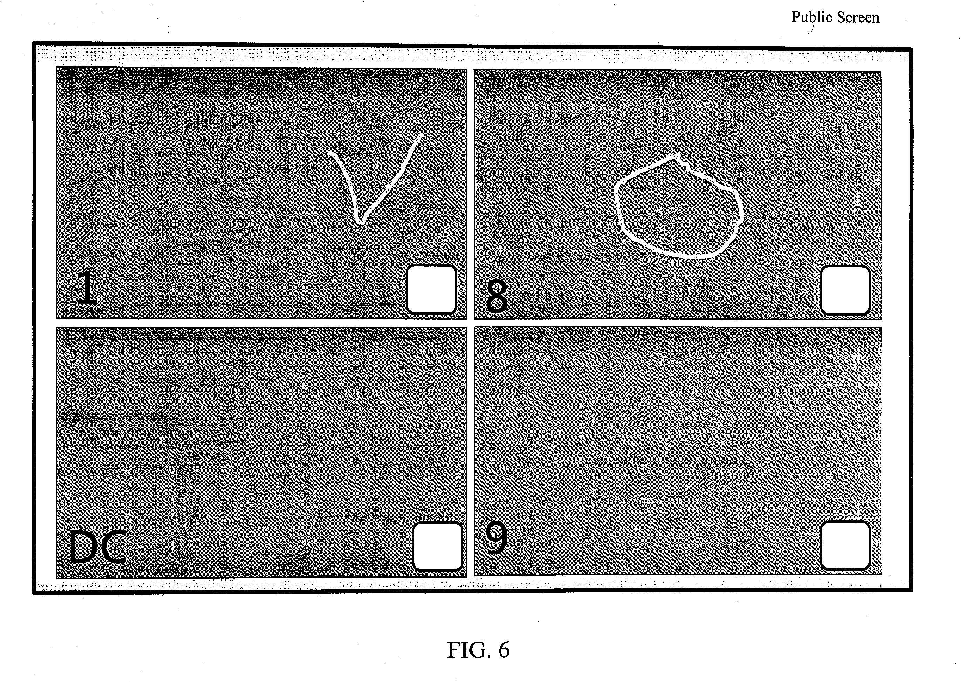

Referring FIG. 4 which is the schematic illustration describing selection of multiple quadrants for the present invention of a multi-source multiple documents comparison display (presentation or discussion) system. Multiple quadrants can be selectively arranged on a public screen which is divided into two quadrants, four quadrants, six quadrants, eight quadrants, nine quadrants, ten quadrants, or twelve quadrants. Referring to FIG. 5 which is the schematic illustration of four quadrants for the present invention of a multi-source multiple documents comparison display (presentation or discussion) system wherein four thumbnails indicating image-based documents (or objects) and data sources are transmitted by Clients and renewed to a new page for initiation of the comparison stage with a decision made. Referring to FIG. 6 which is the schematic illustration explaining four quadrants for the present invention of a multi-source multiple documents comparison display (presentation or discussion) system wherein some footnotes or comments are remarked on the public screen by one user during the comparison stage.

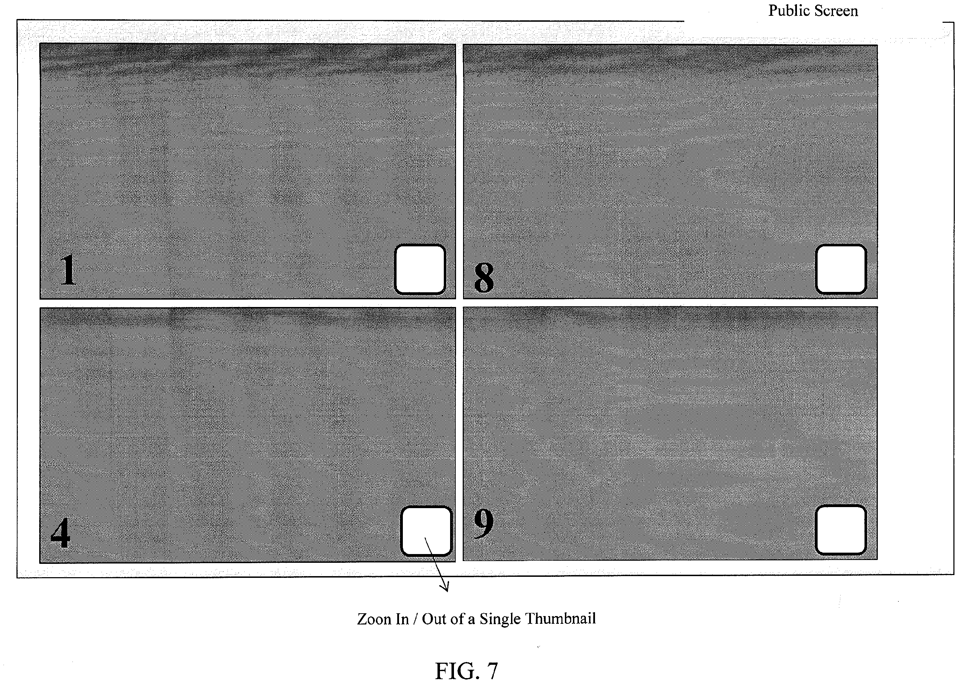

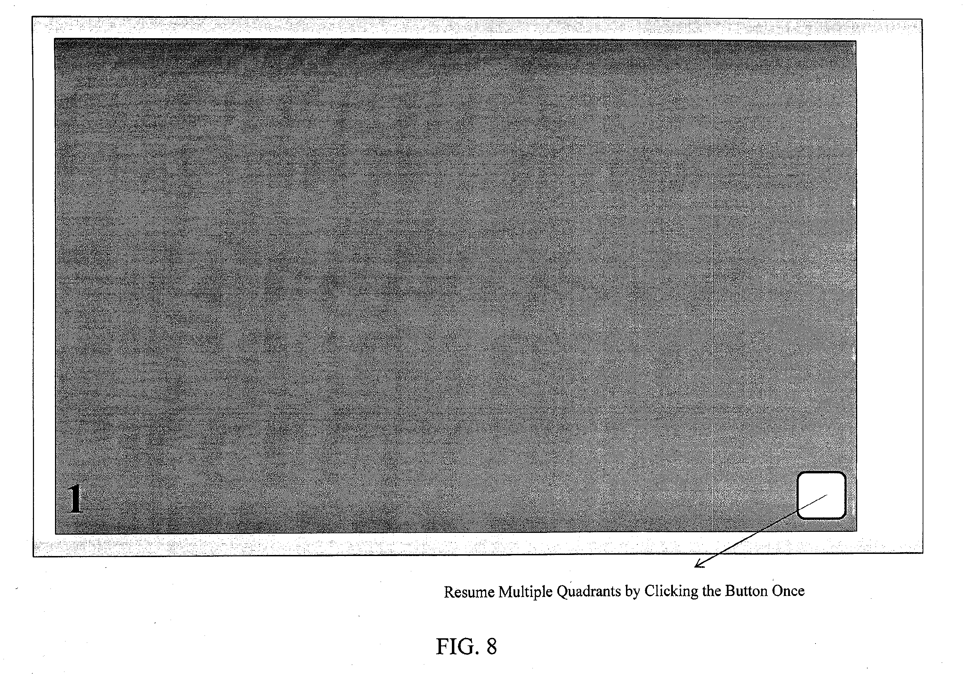

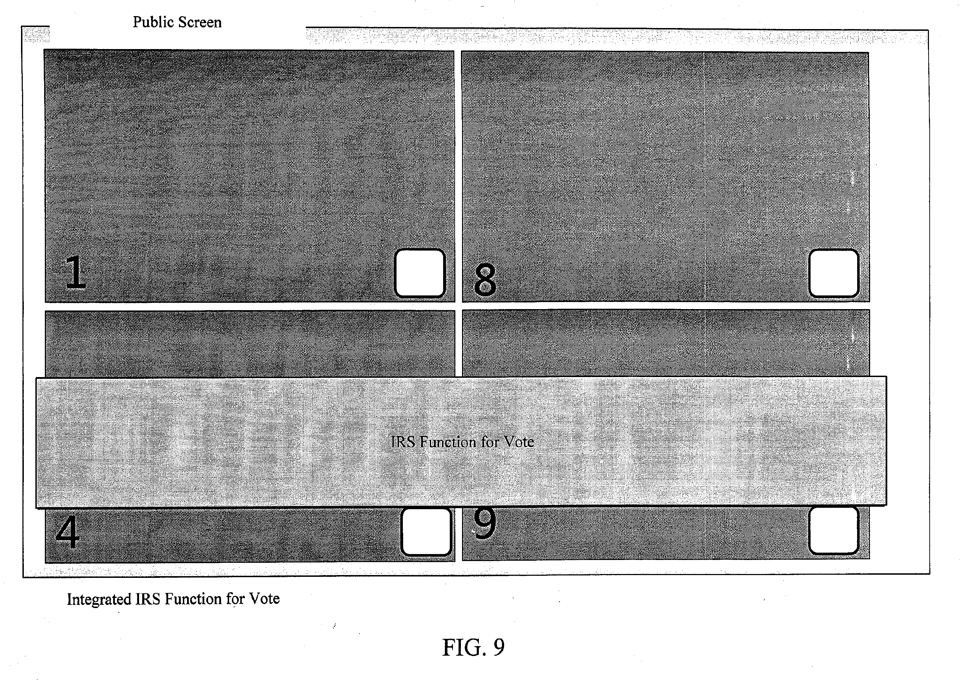

Referring to FIG. 7 which is the schematic illustration indicating multiple quadrants (four quadrants hereinafter) for the present invention of a multi-source multiple documents comparison display (presentation or discussion) system. For four quadrants shown on a public screen, each single thumbnail can be zoomed in by means of a control button. Referring to FIG. 8 which is the schematic illustration indicating a single enlarged thumbnail for the present invention of a multi-source multiple documents comparison display (presentation or discussion) system wherein the single enlarged thumbnail allows an imaged-based document or object to be clearly indicated on a public screen and four quadrants including the said single thumbnail are resumed with a corresponding control button clicked once. Referring to FIG. 9 which is the schematic illumination indicating a vote based on multiple quadrants for the present invention of a multi-source multiple documents comparison display (presentation or discussion) system. For implementation of an IRS function for vote, any determination related to the vote should be received by the host computer (Host) which links those Clients' mobile devices via a Wireless Local Area Network for statistics indicated on the screen.

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

### BRIEF DESCRIPTION OF THE DRAWINGS

FIG. 1 is the schematic illustration for the present invention of a multi-source multiple documents comparison display (presentation or discussion) system;
FIG. 2 is the flowchart for the present invention of a multi-source multiple documents comparison display (presentation or discussion) system;
FIG. 3 is the flowchart explaining zoom in/out of thumbnails in multiple quadrants for the present invention of a multi-source multiple documents comparison display (presentation or discussion) system;
FIG. 4 is the schematic illustration of determining the number of multiple quadrants for the present invention of a multi-source multiple documents comparison display (presentation or discussion) system;
FIG. 5 is the schematic illustration of four quadrants for the present invention of a multi-source multiple documents comparison display (presentation or discussion) system;
FIG. 6 is the schematic illustration explaining four quadrants for the present invention of a multi-source multiple documents comparison display (presentation or discussion) system;
FIG. 7 is the schematic illustration of multiple quadrants for the present invention of a multi-source multiple documents comparison display (presentation or discussion) system;
FIG. 8 is the schematic illustration of an enlarged single thumbnail out of multiple quadrants for the present invention of a multi-source multiple documents comparison display (presentation or discussion) system;
FIG. 9 is the schematic illustration of a vote via multiple quadrants for the present invention of a multi-source multiple documents comparison display (presentation or discussion) system.

### DESCRIPTION OF REFERENCE CHARACTERS OF IMPORTANT PARTS

1 Scanned document/object
2 Document Camera (DC)
3 Host computer (Host)
4 Public screen
5 Wireless Local Area Network (WLAN)
6 Smartphone
7 Tablet personal computer (PAD)
8 Notebook computer
100∼109 Flowchart for the comparison display system
200∼205 Zoom in/out of a thumbnail out of multiple quadrants

## Claims

1. A multi-source multiple documents comparison display (presentation or discussion) system comprising two stages as follows:
Document collection stage deciding the number of multiple quadrants to be arranged via an interface and displaying multi-resource documents: With the multi-source multiple documents comparison display (presentation or discussion) system activated by the host computer (Host), documents saved in Clients' different carriers are transmitted via a cable network or a Wireless Local Area Network;
Comparison display stage: Each document which has been zoomed out and arranged on a public screen can be enlarged and inspected with a control button on each corresponding thumbnail clicked.

2. The multi-source multiple documents comparison display (presentation or discussion) system according to Claim 1 wherein the resources of documents and data are various tools such as Document Camera, tablet personal computer, Smartphone, drawing pad, and notebook computer.

3. The multi-source multiple documents comparison display (presentation or discussion) system according to Claim 1 wherein the Document Camera (DC) is capable of providing scanned substantial objects which are transferred to images and delivered to the host computer.

4. The multi-source multiple documents comparison display (presentation or discussion) system according to Claim 1 wherein the screen could be divided into two quadrants, four quadrants, six quadrants, eight quadrants, nine quadrants, ten quadrants, or twelve quadrants.

5. The multi-source multiple documents comparison display (presentation or discussion) system according to Claim 1 wherein the content of a document or data provides information for some footnotes or comments left on the public screen.

6. The multi-source multiple documents comparison display (presentation or discussion) system according to Claim 1 wherein the real-time vote between the host computer and Clients' mobile devices can be implemented in the comparison display stage.

7. The multi-source multiple documents comparison display (presentation or discussion) system according to Claim 1 wherein the status for an ongoing vote can be shown in multiple quadrants on the public screen.

8. The multi-source multiple documents comparison display (presentation or discussion) system according to Claim 1 wherein the thumbnails are arranged in a page based on multiple quadrants.

9. The multi-source multiple documents comparison display (presentation or discussion) system according to Claim 8 wherein the page based on multiple quadrants comprises at least one image shown on the public screen.

10. The multi-source multiple documents comparison display (presentation or discussion) system according to Claim 8 wherein the page based on multiple quadrants could display an enlarged single image to be checked.
